# EUROPÄISCHE PATENTANMELDUNG

(11) **EP 4 418 470 A1**
(43) Veröffentlichungstag der Anmeldung: **21.08.2024**
(21) Anmeldenummer: 24157936.6
(22) Anmeldetag: 15.02.2024
(51) Int. Cl.: H01R 43/28

(54) **VERFAHREN ZUR UMORDNUNG VON ADERN EINER LEITUNG**

(30) Priorität: 16.02.2023 DE 102023103810
(71) Anmelder: Wieland Electric GmbH, 96052 Bamberg (DE)
(72) Erfinder: NIKOL, Robert, 96110 Schesslitz (DE)
(74) Vertreter: Tergau & Walkenhorst Intellectual Property GmbH

(57) **Zusammenfassung**

Mit einem Verfahren zur Bearbeitung von 2n+1 abgespreizten Aderenden (2) einer Leitung (1), wobei die 2n Aderenden jeweils n Adernpaare (38, 40) bilden, soll die Verwendung von einheitlichen Stecker- oder Buchsenelemente für beide Seiten der Leitung (1) ermöglicht werden, wobei eine richtige Zuordnung der Adern (4) zu den Kontakten aufgrund der Anordnung der Adern (4) gegeben sein soll. Dies wird erreicht indem n Drehhülsen (44) mit jeweils zwei Aufnahmeöffnungen (46) auf die n Aderpaare (38, 40) gesetzt werden, sodass die zwei Aderenden (2) eines Adernpaares (38, 40) jeweils in eine Aufnahmeöffnung (46) einer Drehhülse (44) angeordnet sind und wobei anschließend die n Drehhülsen (44) jeweils um 180° um die gemittelte Aderachse des aufgenommenen Adernpaares (38, 40) gedreht werden, sodass die Aderenden (2) der beiden Adern (4) eines Adernpaares (38, 40) die Position tauschen.

## Beschreibung

Die Erfindung betrifft ein Verfahren zur Bearbeitung von abgespreizten Aderenden einer Leitung.

Eine Leitung umfasst in der Regel mehrere isolierte Adern, die über eine Ummantelung aus Kunststoff oder Gummi zu einer gut zu verlegenden Leitung zusammengefasst werden. In der Hausinstallation werden dabei meistens Leitungen bestehend aus 3- oder 5-adrigen Kupferleitungen verwendet. Die Adern sind in der Leitung meist parallel zueinander angeordnet und liegen aufgrund der kompakten Ummantelung eng aneinander. Bei der Installation der Leitung, insbesondere dem Anschluss der Leitungen an entsprechende Stecker oder Buchsen muss die Ummantelung im Endbereich der Leitung zunächst entfernt werden und die einzelnen Adern voneinander räumlich aufgespreizt werden, damit die einzelnen Adern in die entsprechenden Kontakte der Stecker oder Buchsen eingeführt werden können.

Bei der Installation der Leitung bzw. Anschluss an einen Stecker oder eine Buchse ist es dabei wichtig den Aderenden die richtigen Kontakte zuzuweisen. Zur Vermeidung eines solchen Fehlsteckens sind die Adern mit einer Farbcodierung versehen. Die manuelle Prüfung der Adern und die richtige Zuordnung ist dabei aber zeitaufwendig, arbeitsintensiv und eine Fehlerquelle. Das automatisierte Anschließen der Leitung an eine Buchse oder einen Stecker ist umgekehrt aber nicht ohne weiteres möglich, da die Anordnung der Adern an den jeweiligen Leitungsenden unterschiedlich ist. Dies liegt daran, dass die Adern innerhalb der Leitung starr liegen und nicht verdreht sind, was bedeutet, dass sich eine andere Anordnung der Adern ergibt, wenn frontal auf das eine Leitungsende geschaut wird im Vergleich zu einem Blick auf das andere Leitungsende.

Dieser Unterschied kann zwar mit entsprechenden Stecker- und Buchsenelementen für die verschiedenen Leitungsenden gelöst werden, bedeutet aber umgekehrt die Bereitstellung und Installation von mehreren Stecker- und Buchsenelementen und die Gefahr von Fehlkontaktierungen aufgrund der Verwendung falscher Stecker- oder Buchsenelemente.

Aufgabe der vorliegenden Erfindung ist es daher ein Verfahren anzugeben, welches es ermöglicht, einheitliche Stecker- oder Buchsenelemente für beide Seiten der Leitung zu verwenden, wobei eine richtige Zuordnung der Adern zu den Kontakten aufgrund der Anordnung der Adern gegeben ist.

Diese Aufgabe wird erfindungsgemäß durch das Verfahren nach den Merkmalen des Anspruchs 1 gelöst. Bevorzugte Ausführungen sind Gegenstand der Unteransprüche.

Die Erfindung geht von der Überlegung aus, dass eine einheitliche Verwendung von Stecker- oder Buchsenelementen dann möglich ist, wenn die Anordnung der Adern in der Leitung auf beiden Leitungsenden gleich ist. Dabei wurde erkannt, dass durch die feste Anordnung der Adern in der Leitung diese an beiden Leitungsenden normalerweise spiegelsymmetrisch zueinander angeordnet sind. Dies bedeutet, dass zwar eine einzelne Ader, im Folgenden auch Einzelader genannt, herausgegriffen werden kann, die gleich angeordnet ist, die Reihenfolge der Nachbaradern aber anders ausgeführt ist. Sind die Adern beispielsweise an dem einen Leitungsende in der Draufsicht im Uhrzeigersinn angeordnet, sind diese Adern an dem anderen Leitungsende in der Draufsicht gegen den Uhrzeigersinn angeordnet. Um dies zu beheben, werden erfindungsgemäß Drehhülsen mit zwei Aufnahmeöffnungen verwendet um jeweils zwei Adern, die ein gemeinsames Adernpaar bilden, in derartige Drehhülsen einzuführen. Die Drehhülse kann anschließen um 180° um die gemittelte Aderachse gedreht werden, was zur Folge hat, dass die Adern eines Adernpaares die Position tauschen. Die gemittelte Adernachse beschreibt dabei die Mittelachse der beiden Aderendachsen, also der Bereich einer Ader, der in die Aufnahmeöffnungen einer Drehhülse eintauchen, eines Adernpaares. Mit diesem Verfahren lässt sich die Anordnung der Adern derart ändern, dass die Reihenfolge der Adern in der Draufsicht auf beide Leitungsenden die Gleiche ist. Dies ermöglicht den Anschluss der Leitung in ein einheitliches Stecker- oder Buchsenelement.

Für eine einfache Kontaktierung der Stecker- oder Buchsenelemente sind die Adern in bevorzugter Ausführung in einem vorgelagerten Arbeitsschritt derart gespreizt worden, dass sie auf einem Kreisbogen angeordnet sind. Dies ist beispielsweise durch einen Bearbeitungswerkzeug möglich, welches einen Spreizdorn umfasst, wie im Folgenden kurz erläutert.

Um die Adern abzuspreizen und auf einem Kreisbogen anzuordnen, werden diese am besten aus der Mittelachse radial nach außen gedrückt. Dies lässt sich durch einen Spreizdorn besonders gut realisiert. Der Spreizdorn umfasst dazu einen im Wesentlichen zylindrischen Grundkörper, der im Durchmesser und der Querschnittsform an die gewünschte finale Anordnung der Aderenden angepasst ist. Der Spreizdorn umfasst zusätzlich eine im Wesentlichen rundkegelförmige Spitze die im Verfahren entlang der Mittelachse auf die Aderenden aufgeschoben wird, sodass sich die Aderenden entlang der rundkegelförmigen Spitze aufspreizen. Für eine genaue Positionierung der Aderenden umfasst der Spreizdorn eine Anzahl von Führungsnuten, in die die Aderenden eingreifen und entlang denen die Aderenden während des Aufspreizverfahren geführt werden. Die Führungsnuten verlaufen dabei ausgehend von der Spitze des Spreizdorns radial in Richtung Grundkörper und verlaufen auf der Oberfläche des Grundkörper parallel zueinander weiter.

Um zu verhindern, dass sich die Aderenden über den Durchmesser des Spreizdorns hinaus aufspreizen, umfasst der Spreizdorn in vorteilhafter Weise eine zylindrische Hülse, die den Spreizdorn zumindest im Umfang und der Länge teilweise umgibt. Dabei ist der Innendurchmesser der Hülse in bevorzugter Ausgestaltung derart bemessen, dass die Aderenden einerseits in der Führungsnut liegen, andererseits aber auch im Bereich des Grundkörpers die Bewegungsfreiheit der Aderenden in Radialrichtung von der Innenfläche der Hülse begrenzt wird. Die Hülse kann dabei sowohl fest mit dem Spreizdorn verbunden sein als auch relativ zum Spreizdorn beweglich ausgeführt sein, sodass durch ein Überstülpen der Hülse über den Spreizdorn die Aderenden fest in die Führungsnuten gedrückt werden.

Für eine Kontaktierung der Aderenden mit den entsprechenden Aufnahmekontakten eines Steckers oder einer Buchse müssen diese Aderenden im Endbereich abisoliert werden. Eine Abisolierung dieser Aderenden im Vorfeld der Spreizung ist dabei aufwendig, da die Aderenden noch zu eng beieinanderliegen, eine Abisolierung der Aderenden nach der Benutzung des Bearbeitungswerkzeuges, also nach der Spreizung, führt allerdings dazu, dass die abgespreizten Aderenden durch die Abisolierung wieder verschoben und nicht mehr wie gewünscht ausgerichtet sind. In besonders vorteilhafter Ausgestaltung umfasst das Bearbeitungswerkzeug daher eine Schneidvorrichtung mit einer Anzahl von Schneidmessern, wobei die Schneidmesser auf einem Kreisbogen um die Mittelachse des Spreizdorns angeordnet sind. Somit lässt sich die Abisolierung noch innerhalb des Bearbeitungswerkzeuges und somit in einem Arbeitsschritt zusammen mit der Spreizung der Aderenden durchführen.

In vorteilhafter Weise sind die Schneidmesser daher in einer radialen Line von der Mittelachse und den Führungsnuten angeordnet, sodass die Schneidmesser dabei direkt auf die in den Führungsnuten liegenden Aderenden eingreifen und die Aderenden in dieser fixierten Position abisolieren können. Dazu sind die Schneidmesser bevorzugt radial zur Mittelachse beweglich angeordnet, sodass sie aus einer Ruheposition radial auf die Aderenden in eine Schneidposition verschoben werden können.

Für eine symmetrische Verteilung der Zugkräfte während der Abisolierung durch die Schneidmesser wirken die Schneidmesser bevorzugt gleichzeitig auf die Aderenden ein. Dies wird erreicht, indem die Schneidmesser miteinander, beispielsweise über einen mechanischen Mechanismus, gekoppelt sind.

Die Schneidvorrichtung kann dabei zusätzlich zu einer Hülse vorgesehen sein, bei entsprechender Ausgestaltung der Schneidvorrichtung, insbesondere über eine ausreichende Längserstreckung, die Hülse aber auch ersetzen. Insbesondere ist es vorteilhaft, wenn die Schneidvorrichtung eine Anzahl von Führungsrollen aufweist, die die Führung der Aderenden in den Führungsnuten unterstützt. Die Führungsrollen können dazu eine Umfangsnut aufweisen, die in die Führungsnuten des Spreizdorns eingreifen und somit einen im Wesentlichen kreisförmigen Hohlraum erzeugen, in denen die Aderenden geführt werden.

Die Führungsrollen sind in bevorzugter Ausgestaltung direkt hinter den Schneidmessern angeordnet, sodass sie in einer Art Doppelfunktion sowohl die Aderenden führen, als auch über eine Drehbewegung das abgetrennte Isoliermaterial von den Aderenden aus dem Bearbeitungswerkzeug schieben können.

In vorteilhafter Ausgestaltung können die Schneidmesser und/oder die Führungsrollen in Längsrichtung verschiebbar ausgeführt sein. Dies ermöglicht ein Abziehen der Isolation nach dem Schnitt von den Aderenden, beispielsweise dadurch, dass die Schneidmesser nach dem Eintauchen in das Isolationsmaterial, dieses durch eine Bewegung in Längsrichtung abziehen. Die kann in zusätzlicher oder auch alternativer Ausgestaltung auch durch die Führungsrollen erfolgen.

In bevorzugter Ausführung sind gerade die Adern, die den gleichen Abstand zur Einzelader, also der Ader, die nicht einem Adernpaar zugeordnet ist, aufweisen einem Adernpaar zugewiesen. Bei einer unsymmetrischen Aufteilung der Adern sind die direkten Nachbarn der Einzelader einem Adernpaar zugeordnet, die zweit entfernten Nachbarn einem zweiten Adernpaar und so fort.

Um eine Verdrehung der Drehhülsen aus platztechnischen Gründen zu ermöglichen, wird die Einzelader und/oder einzelne oder mehrere Drehhülsen aus der Leitungsachse herausgeklappt, bevor sie verdreht werden. Nach der Verdrehung der Drehhülsen werden alle weggeklappten Drehhülsen und gegebenenfalls die Einzelader zurückgekappt.

Damit die Aufspreizung und Anordnung der Aderenden, beispielsweise durch ein Bearbeitungswerkzeug mit einem Spreizdorn erreicht, nicht durch die Verdrehung und Neuordnung der Adern aufgegeben wird, sind die Drehhülsen in vorteilhafter Weise derart ausgestaltet, dass die Aufnahmeöffnungen derart beabstandet angeordnet sind, wie es dem Abstand der beiden Adern des der Drehhülse zugewiesenen Adernpaares entspricht. Somit findet zwar eine Neuordnung der Adern statt, die allgemeine Anordnung der Adern im Querschnitt ändert sich aber nicht.

Zur besseren Handhabung der Einzelader und zum Schutz dieser ist bevorzugt eine Einzelhülse mit nur einer Aufnahmeöffnung vorgesehen, die auf die Einzelader gesteckt werden kann, um diese beispielsweise leichter aus der Leitungsachse zu schwenken.

Für eine automatische Neuordnung der Adern umfassen die Drehhülsen und die Einzelhülse über eine Koppelvorrichtung mit dieser sie in eine Dreh- und Klappvorrichtung eingehängt werden können oder dort eingreifen. Diese Dreh- und Klappvorrichtung kann dabei die oben beschrieben Verfahrensschritte zum Ausklappen und Verdrehen automatisiert durchführen und die Adern für den Anschluss an die standardisierte Stecker- oder Buchsenelemente vorbereiten.

Ein Ausführungsbeispiel der Erfindung wird anhand einer Zeichnung näher erläutert. Darin zeigt:
- FIG. 1a-1c: das Verfahren zum Aufspreizen der Aderenden einer Leitung aus seitlicher Perspektive,
- FIG. 2a-2c: das Verfahren zum Aufspreizen der Aderenden einer Leitung aus Sicht der Mittelachse,
- FIG. 3a-3b: das Verfahren zum Aufspreizen der Aderenden einer fünfpoligen Leitung aus Sicht der Mittelachse,
- FIG. 4: die Frontseite der Schneidvorrichtung,
- FIG. 5: die Rückseite der Schneidvorrichtung,
- FIG. 6a-6d: das Verfahren zum Umordnen der Aderenden einer fünfpoligen Leitung.

Gleiche Teile sind in allen Figuren mit denselben Bezugszeichen versehen.

Zunächst wird noch einmal auf das Aufspreizen und Abisolieren von Aderenden eingegangen. Also einem Verfahren, welches vor dem Umordnen der Aderenden durchgeführt werden kann.

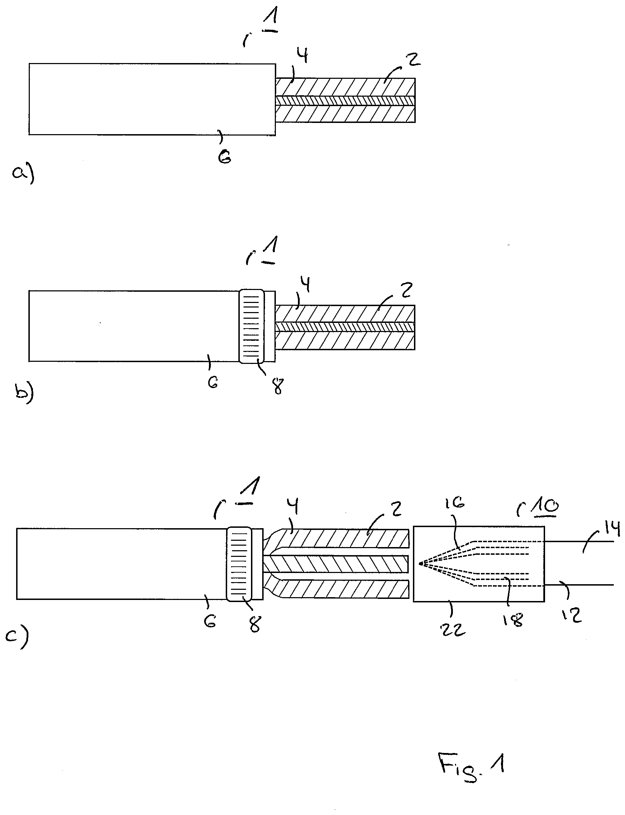

Dazu ist in FIG. 1a ist eine Leitung 1 mit freigelegten Aderenden 2 gezeigt. Die Leitung 1 umfasst dabei einen Bereich, in dem Adern 4 von einer isolierenden Ummantelung 6 umschlossen sind. Diese Ummantelung 6 dient sowohl der zusätzlichen Isolation der Adern als auch des Schutzes vor äußeren Einflüssen und dazu, dass die Adern 4 im Inneren der Ummantelung 6 positioniert und fixiert werden. Für den Anschluss der Leitung 1 an einen Stecker oder eine Buchse wird die Ummantelung 6 in einem Endbereich der Leitung 1 entfernt, sodass die Aderenden 2 frei liegen. Die in Fig 1a dargestellte Leitung 1 umfasst drei Aderenden 2, die eng aneinander liegend und symmetrisch auf einem Kreisbogen angeordnet sind. Nachteilig bei dieser Anordnung ist, dass die Aderenden 2 in der vorliegenden Position so nicht in entsprechende Aufnahmen von nicht dargestellten Steckern oder Buchsen eingeführt werden können, da diese Aufnahmen zur Einhaltung von Luft- und Kriechstrecken und auch zur besseren Handhabbarkeit größere Abstände zueinander aufweisen, als dies für die enganliegenden Aderenden 2, wie sie in der FIG. 1a dargestellt werden, der Fall ist. Für den Anschluss der Leitung an ein Stecker-Buchse-System ist es daher notwendig die Aderenden 2 entsprechend aufzuspreizen, um diese in die Aufnahme der Stecker oder Buchsen einführen zu können.

Für die Fixierung der Adern 4 im Endbereich der Ummantelung 6 ist es möglich in einem ersten Arbeitsschritt einen Klemmring 8 auf die Ummantelung 6 zu schieben und im Endbereich der Ummantelung 6 zu fixieren. Ein in dieser Weise montierter Klemmring 8 ist im Ausführungsbeispiel nach der FIG. 1b gezeigt. Dieser Klemmring 8 führt zu einer örtlichen Verjüngung des Querschnitts der Leitung 1 im Klemmbereich und somit zu einer Fixierung der Adern 4 innerhalb der Leitung. Der Klemmring 8 dient somit einerseits als Zugentlastung für die Aderenden 2 aber auch, um die Aderenden 2 in der vorliegenden Anordnung und Reihenfolge zu halten.

Wie in FIG. 1c dargestellt wird zur Aufspreizung des Aderenden 2 ein Bearbeitungswerkzeug 10, welches einen Spreizdorn 12 umfasst, entlang der Mittelachse der Leitung 1 auf die Aderenden 2 geschoben, um diese derart zu verformen, dass ihr Abstand zur Mittelachse vergrößert wird. Dazu umfasst der Spreizdorn 12 einen zylindrischen Grundkörper 14 mit einer im Wesentlichen rundkegelförmigen Spitze 16. Die Spitze 16 wird entlang der Mittelachse in Richtung der Aderenden 2 verschoben, sodass die Aderenden 2 entlang der Oberfläche der rundkegelförmigen Spitze 16 gleiten und aus der Mittelachse heraus gedrückt werden. Dazu erstrecken sich von der Spitze aus eine Anzahl von Führungsnuten 18, die strahlenförmig bis in den Bereich des zylindrischen Grundkörpers 14 verlaufen, in dem sie im Wesentlichen parallel zueinander angeordnet sind. Die Anzahl der Führungsnuten 18 entspricht im Idealfall der Anzahl der Aderenden, sodass jedem Aderende eine Führungsnut zugeordnet ist. Im vorliegenden Ausführungsbeispiel umfasst der Spreizdorn somit drei Führungsnuten 18 die im Winkel von 120° geleichmäßig verteilt sind. Im Prinzip ist es aber auch möglich, dass der Spreizdorn 12 mehr Führungsnuten 18 als Aderenden aufweist, um auch für andere Leitungen 1 mit einer anderen Anzahl von Aderenden 2 geeignet zu sein.

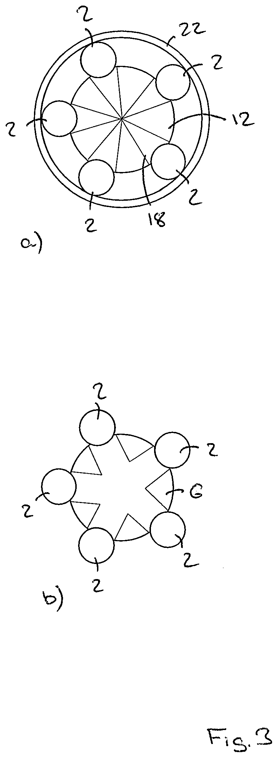

Wie auch später im Rahmen der FIG. 3 beispielhaft für fünf Aderenden 2 beschrieben, ist das vorgestellte Verfahren nicht auf drei Aderenden 2 beschränkt, vielmehr ist jede beliebige Anzahl von Aderenden 2 bei entsprechender Anpassung des Spreizdorns 12 und der noch zu beschreibenden Schneidvorrichtung 20 möglich.

Der Spreizdorn 12 nach dem Ausführungsbeispiel nach der FIG. 1c umfasst ebenfalls eine Hülse 22, die den Spreizdorn 12 zumindest teilweise umgibt. Diese Hülse 22 ist dabei im Innendurchmesser etwas größer als der Außendurchmesser des Spreizdorns 12 ausgebildet, und zwar derart bemessen, dass die Aderenden 2 innerhalb der Führungsnuten 18 liegen können, in der gegenüberliegenden Seite, also der der Führungsnut 18 abgewandten Seite, aber von der Hülse 22 begrenzt werden. Somit ist es möglich, die Aderenden 2 auch in radialer Richtung optimal aufgrund der Geometrie des Spreizdorns 12 zu positionieren. Ein zu weites Abstehen bzw. Aufspreizen der Aderenden 2 wird durch die Innenwandung der Hülse 22 vermieden.

Nachdem der Spreizdorn auf die Leitung 1 aufgesteckt wurde und die Aderenden 2 entsprechend der Geometrie des Spreizdorns 12 aufgespreizt wurden, kann dieser wieder abgezogen werden. Dabei wird er entlang der Mittelachse von der Leitung 1 weg verschoben. Die Aderenden 2 bleiben aufgrund ihrer starren Struktur in der abgespreizten Stellung liegen und können weiterverarbeitet werden, insbesondere in entsprechende Aufnahmen eines Steckers oder einer Buchse eingeführt werden.

Selbstverständlich ist der hier und im Folgenden beschriebene Verfahrensablauf hinsichtlich der Relativbewegungen symmetrisch und somit auch umgekehrt möglich. Das bedeutet, dass der Spreizdorn 12 bzw. das Bearbeitungswerkzeug 10 örtlich fixiert sein kann und die Leitung 1 auf den Spreizdorn 12 aufgeschoben wird.

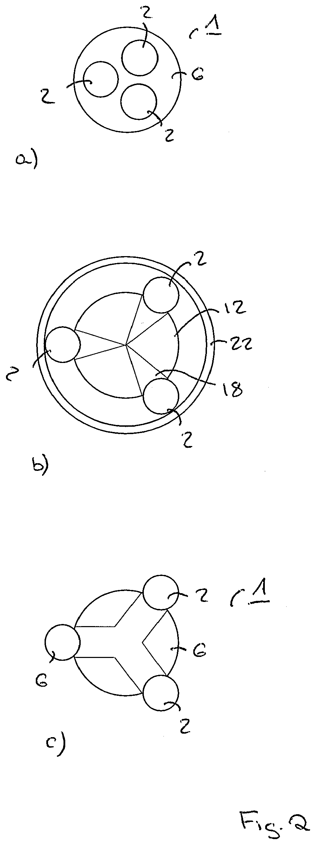

Das Verfahren zum Aufspreizen von Aderenden 2 ist auch in den Figuren 2a-2c in Draufsicht aus Sicht der Mittelachse für eine dreiadrige Leitung 1 dargestellt. In FIG. 2a wird die Aderkonfiguration vor dem Aufspreizen gezeigt. Deutlich zu sehen ist sind die drei enganliegenden Adern 4, die noch innerhalb des Leitungsquerschnitts liegen. In FIG. 2b ist der Draufsicht auf einen Spreizdorn 12 mit einer Hülse 22 gezeigt, wobei deutlich wird, dass die Aderenden 2 zwischen der Führungsnut 18 und der Hülseninnenwand liegen und dort gehalten werden. Nach dem Aufspreizen der Aderenden 2 und dem Entfernen des Spreizdorns sind die Adern4 , wie in FIG. 2c dargestellt in der durch den Spreizdorn 12 gewünschten Konfiguration angeordnet und können so weiterverarbeitet werden. Deutlich zu erkennen ist, dass die Aderenden 2 nun zumindest teilweise außerhalb des Leitungsquerschnitts liegen. Dies wird erreicht in dem der Spreizdorn 2 im Durchmesser entsprechend ausgebildet ist.

Eine entsprechende Darstellung für eine fünfadrige Leitung 1 ist in den Figuren 3a und 3b gezeigt. Für eine fünfadrige Leitung 1 umfasst der Spreizdorn 12 entsprechend fünf Führungsnuten 18, die auch hier äquidistant auf der Oberfläche angeordnet sind. Wie auch in der FIG. 2b ist in der FIG. 3a die Draufsicht auf einen Spreizdorn 12 mit einer Hülse 22 gezeigt, wobei auch hier deutlich wird, dass die Aderenden 2 zwischen der Führungsnut 18 und der Hülseninnenwand liegen und dort gehalten werden. Nach Aufspreizen der Aderenden 2 und Entfernen des Spreizdorns 12 sind die Adern 4, wie in FIG. 3b dargestellt in der durch den Spreizdorn 12 gewünschten Konfiguration angeordnet und können so weiterverarbeitet werden. Auch hier ist deutlich zu erkennen, dass die Aderenden 2 nun zumindest teilweise außerhalb des Leitungsquerschnitts liegen. Was auch hier wiederum dadurch erreicht wird, dass der Spreizdorn 12 entsprechend ausgebildet ist.

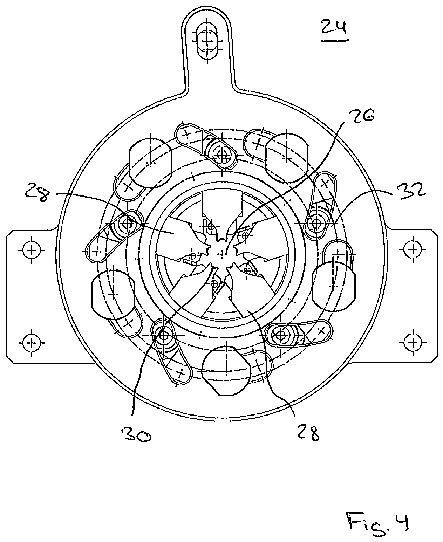

Alternativ oder zusätzlich zur Hülse 22 kann das Bearbeitungswerkzeug 10 auch eine Schneidvorrichtung 20 umfassen. Ein Ausführungsbeispiel einer solchen Schneidvorrichtung 20 ist in FIG. 4 in einer Frontdarstellung gezeigt. Frontdarstellung meint dabei, dass dies aus Sicht des Leitungsendes dargestellt ist, welches in der Darstellung in der Mittelachse 26 in die Schneidvorrichtung 20 eintaucht. Nicht in FIG. 4 dargestellt ist der Spreizdorn 12 und eine etwaige zusätzliche Hülse 22. Der Spreizdorn 12 wäre ebenfalls in der Mittelachse angeordnet und würde in dieser Darstellung mit der Spitze 16 aus der Zeichnungsebene hinausschauen.

Der FIG. 4 deutlich zu entnehmen sind die fünf äquidistant um die Mittelachse 26 angeordneten Schneidmesser 28 zum Abisolieren der Aderenden einer fünfadrigen Leitung. Es ergibt sich von selbst, dass die entsprechende Schneidvorrichtung 20 für dreiadrige Leitungen zumindest drei entsprechend angeordnete Schneidmesser 28 umfasst. Die Schneidflächen 30 der Schneidmesser sind der Mittelachse 26 zugewandt und kreisbogenförmig ausgeführt, um die Isolation der Aderenden 2 größtmöglich zu umgreifen und somit eine besonders gute und einfache Abisolierung zu erreichen. Für die Abisolierung können die Schneidmesser 28 radial zur Mittelachse 26 verschoben werden, um so auf die Aderenden eingreifen zu können. Damit dies im Wesentlichen gleichzeitig geschieht, sind die Schneidmesser 28 über einen umlaufenden Mechanismus 32 mechanisch gekoppelt.

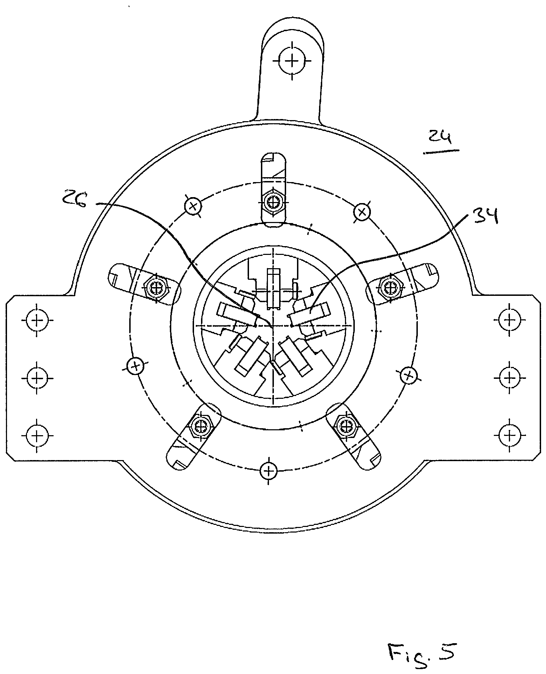

In der FIG. 5 ist die Rückseite der Schneidvorrichtung 20 dargestellt, also die Perspektive aus der die Aderenden 2 aus der Bildebene heraustauchen. Die Rückseite offenbart fünf Führungsrollen 34 , die im Vergleich mit der Darstellung aus FIG. 4 in Einführrichtung der Aderenden 2 hinter den Schneidmessern 28 angeordnet sind. Die Führungsrollen 34 können einerseits die Funktion der Hülse 22 übernehmen und die Aderenden 2 zwischen sich und den Führungsnuten 18 des Spreizdorns 12 halten. Dazu weisen die Führungsnuten 18 eine umlaufende Nut auf, die zusammen mit den Führungsnuten 18 des Spreizdornes eine im Wesentlichen im Querschnitt kreisförmige Führungsöffnung bildet. Andererseits dient die gezielte Anordnung der Führungsrollen 34 hinter den Schneidmessern 28 aber auch dazu das durch die Schneidmesser 28 abgetrennte Isolationsmaterial der Aderenden 2 aus dem System zu führen, in dem die Führungsrollen 34 mit einer Drehbewegung das Isolationsmaterial mitnehmen und von der Kupferader des Aderendes 2 abziehen. Dazu sind die Führungsrollen 34 drehbar gelagert.

Die Schneidvorrichtung 20 nach den Figuren 4 und 5 ist darüber hinaus dazu ausgelegt die Schneidmesser 28 und die Führungsrollen 30 in Längsrichtung, also in Mittelachsenrichtung, zu verschieben. Dies ermöglicht, dass die Schneidmesser 28 in das Isolationsmaterial der Aderenden 2 eintauchen und dieses auftrennen und durch eine anschließende Bewegung in Längsrichtung von der Ader 4 abziehen können. Dies kann alternativ oder auch zusätzlich unterstützend von den Führungsrollen 34 übernommen werden.

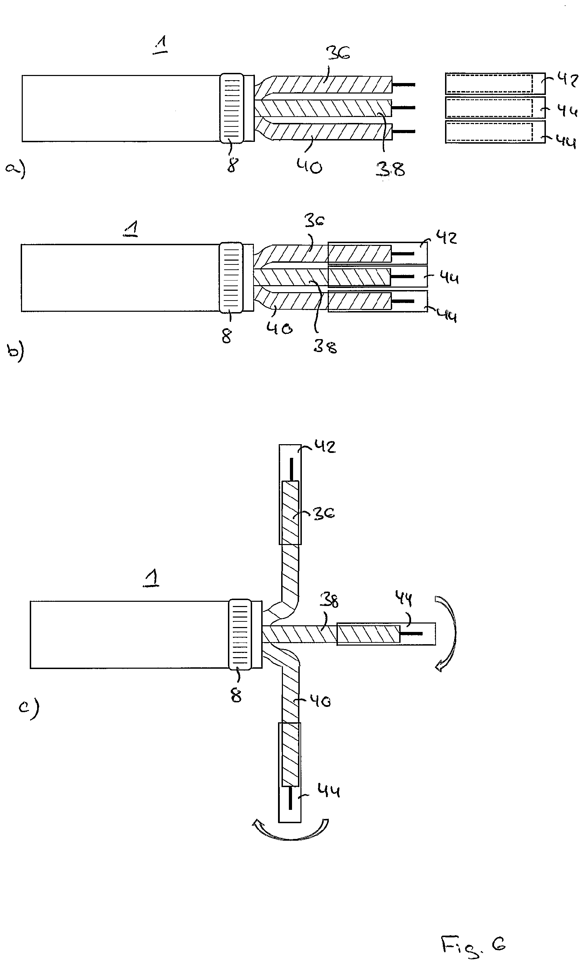

In FIG. 6a -6d ist das Verfahren zum Umordnen von Aderenden 2 am Beispiel einer fünfadrigen Leitung 1 gezeigt. Aufgrund der symmetrischen Anordnung der Aderenden 2 auf einem Kreisbogen, beispielsweise durch ein oben beschriebenes Bearbeitungswerkzeug 10, sind in der Perspektive der Figur 6a - 6c nur drei Adern sichtbar. Die obere Ader 4 ist die Einzelader 36 und damit die Bezugsader für die Umordnung der anderen Adern 4. Die der Darstellung der FIG. 6a unter der Einzelader 36 angeordnete Ader bildet mit der perspektivisch direkt hinter ihr angeordneten Ader das erste Adernpaar 38, da diese die beiden direkten Nachbarn der Einzelader 36 darstellen. Die in der FIG. 6a dargestellte untere Ader bildet wieder mit der perspektivisch direkt hinter ihr angeordneten Ader das zweite Adernpaar 40. Wie in der FIG. 6a schon dargestellt wird der Einzelader 38 eine Einzelhülse 42 und den beiden Adernpaaren 38,40 jeweils eine Drehhülse 44 zugeordnet.

Im nächsten Verfahrensschritt, welcher in FIG. 6b dargestellt ist, werden die Hülsen 42, 44 auf die Aderenden 2 geschoben. Um Platz für die Verdrehung zu schaffen, wird anschließend, wie in FIG. 6c dargestellt, die Einzelhülse 42 aus der Leitungsachse heraus nach oben und die Drehhülse 44 des zweiten Adernpaares 40 aus der Leitungsachse heraus nach unten geklappt. Somit können die beiden Drehhülsen anschließend um 180° um die gemittelte Aderachse gedreht werden. Anschließend wird die Einzelhülse 42 und die verdrehte Drehhülse 44 des zweiten Adernpaares 44 wieder in die Leitungsachse gedrückt und die Hülsen 42,44 können abgezogen werden.

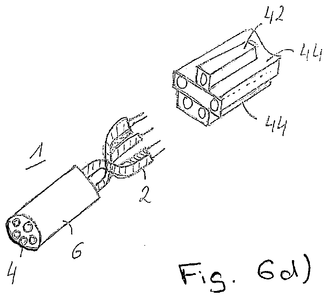

Das Leitungsende mit den verdrehten Adern 4 ist in FIG. 6d noch einmal perspektivisch gezeigt. Dort sind auch die drei Hülsen 42,44 zu erkennen und auch die unterschiedlichen Abstände der Aufnahmeöffnungen 46 bei den Drehhülsen, um der Anordnung der Aderenden 2 auf einem Kreisbogen Rechnung tragen zu können.

### Bezugszeichenliste

- 1: Leitung
- 2: Aderenden
- 4: Adern
- 6: Ummantelung
- 8: Klemmring
- 10: Bearbeitungswerkzeug
- 12: Spreizdorn
- 14: Grundkörper
- 16: Spitze
- 18: Führungsnuten
- 20: Schneidvorrichtung
- 22: Hülse
- 26: Mittelachse
- 28: Schneidmesser
- 30: Schneidflächen
- 32: Mechanismus
- 34: Führungsrollen
- 36: Einzelader
- 38: erstes Adernpaar
- 40: zweites Adernpaar
- 42: Einzelhülse
- 44: Drehhülse
- 46: Aufnahmeöffnung

## Patentansprüche

1. Verfahren zur Bearbeitung von 2n+1 abgespreizten Aderenden (2) einer Leitung (1), wobei die 2n Aderenden (2) jeweils n Adernpaare (38, 40) bilden, **dadurch gekennzeichnet, dass**
n Drehhülsen (44) mit jeweils zwei Aufnahmeöffnungen (46) auf die n Aderpaare (38, 40) gesetzt werden, sodass die zwei Aderenden (2) eines Adernpaares (38, 40) jeweils in eine Aufnahmeöffnung (46) einer Drehhülse (44) angeordnet sind und wobei anschließend die n Drehhülsen (44) jeweils um 180° um die gemittelte Aderachse des aufgenommenen Adernpaares (38, 40) gedreht werden, sodass die Aderenden (2) der beiden Adern (4) eines Adernpaares (38, 40) die Position tauschen.

2. Verfahren zur Bearbeitung von abgespreizten Aderenden (2), nach Anspruch 1, **dadurch gekennzeichnet, dass** die Aderenden (2) in einem vorgelagerten Arbeitsschritt auf einen Kreisbogen angeordnet werden.

3. Verfahren zur Bearbeitung von abgespreizten Aderenden (2) nach einem der Ansprüche 1 oder 2, **dadurch gekennzeichnet, dass** die Aderenden (2) eines Adernpaares (38, 40) jeweils den gleichen Abstand zur Einzelader (36), die keinem Adernpaar (38, 40) zugewiesen ist, aufweisen.

4. Verfahren zur Bearbeitung von abgespreizten Aderenden (2) nach einem der Ansprüche 1 bis 3, **dadurch gekennzeichnet, dass** vor dem Verdrehen der Drehhülsen (44) die Einzelader (36), die keinem Adernpaar (38, 40) zugewiesen ist, und/oder eine oder mehrere der Drehhülsen (44) derart aus der Leitungsachse herausgeklappt wird/werden, dass eine Verdrehung der Drehhülsen (44) ermöglicht wird und nach der Verdrehung aller Drehhülsen (44) wieder in die Leitungsachse zurückgeklappt wird/werden.

5. Verfahren zur Bearbeitung von abgespreizten Aderenden (2) nach einem der Ansprüche 1 bis 4, **dadurch gekennzeichnet, dass** der Abstand der beiden Aufnahmeöffnungen (46) einer Drehhülse (44) derart bemessen ist, dass er dem Abstand des zugeordneten Adernpaares (38, 40) entspricht, sodass die Adernpaare (38, 40) bei einer Verdrehung der Drehhülse (44) um 180° nur die ursprüngliche Position tauschen.

6. Verfahren zur Bearbeitung von abgespreizten Aderenden (2) nach einem der Ansprüche 1 bis 5, **dadurch gekennzeichnet, dass** eine Einzelhülse (42) auf die Einzelader (36), die keinem Adernpaar zugewiesen ist, gesetzt wird.

7. Verfahren zur Bearbeitung von abgespreizten Aderenden (2) nach einem der Ansprüche 1 bis 6, **dadurch gekennzeichnet, dass** die Drehhülsen (44) und/oder die Einzelhülse (42) mit einer Dreh- und Klappvorrichtung gekoppelt wird/werden.
